# EUROPÄISCHE PATENTSCHRIFT

(11) **EP 3 422 538 B1**
(45) Veröffentlichungstag und Bekanntmachung des Hinweises auf die Patenterteilung: **03.07.2024**
(21) Anmeldenummer: 18168678.3
(22) Anmeldetag: 23.04.2018
(51) Int. Cl.: H02K 5/20, H02K 9/19, H02K 1/32, H02K 9/193, H02K 9/197

(54) **ELEKTRISCHE MASCHINE UND KRAFTFAHRZEUG**
ELECTRICAL MACHINE AND MOTOR VEHICLE
MACHINE ÉLECTRIQUE ET VÉHICULE AUTOMOBILE

(30) Priorität: 30.06.2017 DE 102017211135
(43) Veröffentlichungstag der Anmeldung: 02.01.2019
(73) Patentinhaber: AUDI AG, 85045 Ingolstadt (DE)
(72) Erfinder: Scharlach, Albert, 85129 Oberdolling (DE)

(56) Entgegenhaltungen:
- DE-A1-102012 022 453
- US-A- 4 598 223
- US-A1- 2005 151 431
- US-A1- 2008 024 020
- US-A1- 2009 015 081
- US-A1- 2012 025 638
- US-A1- 2016 164 377

## Beschreibung

Die Erfindung betrifft eine elektrische Maschine mit einem Gehäuse, in dem ein Stator mit mehreren Wickelköpfen angeordnet ist, wobei das Gehäuse wenigstens einen von einem Kühlmedium durchströmbaren Kühlkanal aufweist. Außerdem betrifft die Erfindung ein Kraftfahrzeug.

Elektrische Maschinen, welche für hohe Nennleistungen ausgelegt sind, können im Betrieb eine Kühlung benötigen, um insbesondere stromführende Komponenten der elektrischen Maschine zu kühlen. Insbesondere kann eine Kühlung von Wickelköpfen einer oder mehrerer Statorwicklungen erforderlich sein, da sich diese im Betrieb aufgrund der durch sie fließenden Ströme stark erwärmen können. Aus dem Stand der Technik sind verschiedene Möglichkeiten zur Kühlung solcher Wickelköpfe bekannt.

In DE 10 2014 224 941 A1 wird eine Kühlanordnung für eine elektrische Maschine beschrieben, bei der Wickelköpfen eines Stators über im Gehäuse der elektrischen Maschine angeordnete Öllanzen ein Kühlöl zuführbar ist. Die Öllanzen sind dabei über eine Verteilerleiste verbunden, welche ebenfalls im Inneren des Gehäuses angeordnet ist. Über die Verteilerleiste kann das Kühlöl zu den Öllanzen geleitet werden.

DE 10 2012 019 749 A1 beschreibt eine elektrische Maschine für einen Kraftfahrzeugsantriebsstrang, bei der den Wickelköpfen des Stators über mehrere, das Gehäuse durchdringende Rohrleitungen ein Kühlöl zugeführt werden kann. Zusätzlich dazu ist ein Wärmetauscher vorgesehen, welcher an einer Mantelfläche eines Blechpakets des Stators angeordnet ist, um eine weitere Abfuhr von Wärme aus der elektrischen Maschine zu ermöglichen.

In EP 0 329 790 A1 wird ein Kühlsystem für einen elektrischen Motor beschrieben, bei dem aus stirnseitig angeordneten Düsen ein Kühlöl auf die Wickelköpfe gesprüht wird. Dadurch wird, verglichen mit einem außen am Gehäuse angeordneten Kühler, eine verbesserte Kühlung der Statorwicklungen erreicht.

Dokumente US2009/015081 A1, US2008/024020 A1, US2005/151431 A1, US4598223 A beziehen sich auf elektrische Maschinen mit einem Gehäuse, wobei das Gehäuse wenigstens einen von einem Kühlmedium durchströmbaren Kühlkanal aufweist, wobei das Gehäuse aus wenigstens zwei Gehäusebauteilen besteht. H

Dokument US2016/164377 A1 bezieht sich auf ein Gehäuse, das wenigstens einen von einem Kühlmedium durchströmbaren Kühlkanal aufweist und das einen von einem weiteren Kühlmedium durchströmbaren, weiteren Kühlkanal aufweist.

Der Erfindung liegt die Aufgabe zugrunde, eine verbesserte elektrische Maschine anzugeben.

Zur Lösung dieser Aufgabe ist eine erfindungsgemäße elektrische Maschine nach Anspruch 1 vorgesehen.

Der Vorteil der erfindungsgemäßen Lösung besteht darin, dass durch den im Gehäuse verlaufenden kreisförmigen oder kreissegmentförmigen Ringkanalabschnitt des Kühlkanals ein vereinfachter Aufbau der elektrischen Maschine erreicht wird, jedoch gleichzeitig einem oder mehreren der Wickelköpfe der elektrischen Maschine das Kühlmedium zugeführt werden kann. Das Gehäuse mit dem integrierten Kühlkanal ist aus mehreren Gehäusebauteilen zusammengesetzt Der Kühlkanal verläuft dabei bevorzugt innerhalb einer Wand des Gehäuses. Der Stator der elektrischen Maschine ist dabei bevorzugt direkt am Gehäuse befestigt. Das Gehäuse kann dabei insbesondere so ausgeführt sein, dass es die gesamte elektrische Maschine wenigstens in Umfangsrichtung umschießt. Es werden somit für die Kühlung keine zusätzlichen Bauteile zum Transport eines Kühlmediums benötigt.

Der Ringkanalabschnitt des Kühlkanals kann dabei dem Verlauf des Stators folgen und eine kreisförmige, insbesondere konzentrisch zum Stator verlaufende Form aufweisen. Alternativ dazu kann ein Ringkanalabschnitt auch einen kreissegmentförmigen Verlauf aufweisen. Bei einer elektrischen Maschine, deren Kühlkanal mehrere Ringkanalabschnitte umfasst, können sowohl Ringkanäle mit kreisförmigem Verlauf als auch Ringkanäle mit einem kreissegmentförmigen Verlauf vorgesehen sein.

Der Ringkanalabschnitt weist wenigstens eine Öffnung auf, über die wenigstens einem Wickelkopf das Kühlmedium zuführbar ist. Bevorzugt weist der Ringkanalabschnitt für jeden zu kühlenden Wickelkopf wenigstens eine Öffnung auf.

Die Wickelköpfe des Stators können beispielsweise von stirnseitig aus dem Stator austretenden Statorwicklungen gebildet sein, wobei die Statorwicklungen beispielsweise aus mit Isolierlack überzogenen Kupferleitungen bestehen. Das Gehäuse kann beispielsweise aus Metall und/oder Kunststoff bestehen und einstückig in einem Gießvorgang gefertigt werden oder aus mehreren aus Metall oder Kunststoff bestehenden Teilen zusammengesetzt werden. Beispielsweise kann der Ringkanalabschnitt als separates Teil gefertigt werden und mit weiteren Teilen zur Bildung des Gehäuses zusammengesetzt werden, wodurch auf einfache Weise Gehäuse mit einem in ihrem Inneren verlaufenden Kühlkanal gefertigt werden können.

Erfindungsgemäß kann vorgesehen sein, dass die wenigstens eine Öffnung eine Düse ist, durch welche das Kühlmedium wenigstens einem Wickelkopf durch Aufsprühen zuführbar ist. Die Düse befindet sich dabei bevorzugt in einer etwas beabstandeten Position zum Wickelkopf, so dass das durch sie austretende Kühlmedium auf eine möglichst große Fläche des Wickelkopfes aufgesprüht werden kann. Das auf den Wickelkopf aufgesprühte Kühlmedium läuft am Wickelkopf entlang, wobei es Wärme des Wickelkopfes aufnimmt.

Eine bevorzugte Ausgestaltung der Erfindung sieht vor, dass das Kühlmedium über den Ringkanalabschnitt wenigstens einem in der Einbauposition der elektrischen Maschine oben liegenden Wickelkopf zuführbar ist. Je nach Anzahl und Anordnung der Wickelköpfe der elektrischen Maschine kann diese auch zwei oben liegende Wickelköpfe aufweisen, wobei in diesem Fall bevorzugt beiden oben liegenden Wickelköpfen über den Ringkanalabschnitt das Kühlmedium zuführbar ist.

Erfindungsgemäß kann vorgesehen sein, dass das Kühlmedium über den Ringkanalabschnitt mehreren, in Umfangsrichtung der elektrischen Maschine beabstandet voneinander angeordneten Wickelköpfen zuführbar ist. Der Stator der elektrischen Maschine ist bevorzugt zylinderförmig, so dass in Umfangsrichtung des Stators an einer Stirnseite mehrere Wickelkopfe angeordnet sein können. Der Ringkanalabschnitt des Kühlkanals kann dabei eine kreisförmige oder kreissegmentförmige Form aufweisen, wobei den in Umfangsrichtung der elektrischen Maschine beabstandet voneinander angeordneten Wickelköpfen bevorzugt jeweils über wenigstens eine Öffnung des Ringkanals das Kühlmedium zuführbar ist.

Für den Kühlkanal kann in einer bevorzugten Ausgestaltung der Erfindung vorgesehen sein, dass er zwei Ringkanalabschnitte umfasst, welche in Längsrichtung der elektrischen Maschine voneinander beabstandet sind, wobei über den einen Ringkanalabschnitt wenigstens einem Wickelkopf an einer Seite des Stators das Kühlmedium zuführbar ist und über den anderen Ringkanalabschnitt wenigstens einem Wickelkopf an einer anderen Seite des Stators das Kühlmedium zuführbar ist. Auf diese Weise kann über die Ringkanalabschnitte an jeder Stirnseite des Stators jeweils wenigstens einem Wickelkopf das erste Kühlmedium zugeführt werden. Es ist auch möglich, dass an jeder Seite des Stators mehreren, beispielsweise in Umfangsrichtung der elektrischen Maschine beabstandet voneinander angeordneten Wickelköpfen das Kühlmedium zuführbar ist. Durch die zwei voneinander beabstandeten Ringkanalabschnitte wird eine Kühlung von Wickelköpfen auf beiden Seiten des Stators der elektrischen Maschine ermöglicht.

Weiterhin kann erfindungsgemäß vorgesehen sein, dass der Kühlkanal wenigstens einen Verbindungsabschnitt umfasst, welcher die zwei Ringkanalabschnitte miteinander verbindet. Der Verbindungsabschnitt kann dabei insbesondere in Längsrichtung der elektrischen Maschine verlaufen und die beiden Ringkanalabschnitte miteinander verbinden. Es können auch mehrere in Längsrichtung verlaufende Verbindungsabschnitte, welche in Umfangsrichtung beabstandet voneinander angeordnet sind, vorgesehen sein, welche die zwei Ringkanalabschnitte auf diese Weise an mehreren Stellen miteinander verbinden.

Für die Zufuhr des Kühlmittels kann erfindungsgemäß vorgesehen sein, dass das Gehäuse wenigstens einen mit dem Kühlkanal kommunizierenden Anschluss zur Zufuhr des Kühlmediums aufweist. Insbesondere im in Einbauposition oberen Bereich der elektrischen Maschine kann ein Anschluss vorgesehen sein, über welchen dem Kühlkanal das Kühlmedium zugeführt werden kann. Die elektrische Maschine kann auch an der in Einbauposition unten liegenden Seite einen Ablauf für das Kühlmedium aufweisen, über den das Kühlmedium, welches den Wickelköpfen zugeführt wurde, aus dem Inneren der elektrischen Maschine ablaufen kann. Der Ablauf kann dabei beispielsweise mit einem an der Unterseite der elektrischen Maschine liegenden Sumpf verbunden sein, in dem sich von den Wickelköpfen abfließendes oder abtropfendes Kühlmedium sammeln kann. Über den Anschluss und den Ablauf kann der Kühlkanal an einen Kühlmediumkreislauf angeschlossen werden, welcher beispielsweise einen Wärmetauscher zur Wärmeabgabe und eine Pumpe zum Fördern des Kühlmediums umfassen kann.

Der Sumpf kann insbesondere so ausgebildet sein, dass ein oder mehrere, in Einbauposition der elektrischen Maschine unten liegende Wickelköpfe wenigstens teilweise zur Kühlung von dem im Sumpf befindlichen Kühlmedium bedeckt sind. Bevorzugt werden die Wickelköpfe, welche nicht durch das Kühlmedium im Sumpf bedeckt werden, über wenigstens einen der kreisförmigen oder kreissegmentförmigen Ringkanalabschnitte des Kühlkanals mit dem ersten Kühlmedium beaufschlagt. Dadurch wird eine Kühlung aller Wickelköpfe der elektrischen Maschine erreicht.

Erfindungsgemäß kann vorgesehen sein, dass die elektrische Maschine eine Welle mit einem Wellenkühlkanal umfasst, wobei der Kühlkanal mit dem Wellenkühlkanal verbunden ist. Der Wellenkühlkanal kann dabei beispielsweise im Inneren einer hohlen Welle verlaufen, wobei dem Wellenkühlkanal über zusätzliche Kanalabschnitte des Kühlkanals über das Gehäuse das Kühlmedium zugeführt werden kann. Durch einen solchen Wellenkühlkanal wird die Wärmeabfuhr aus dem Inneren der Maschine durch das Kühlmedium weiter verbessert. Der Wellenkühlkanal kann dabei an einen Kühlkreislauf angeschlossen werden, so dass das Kühlmedium beispielsweise durch eine Pumpe nach dem Durchströmen eines Wärmetauschers wieder in den Kühlkanal des Gehäuses eingespeist werden kann.

Für das Kühlmittel kann erfindungsgemäß vorgesehen sein, dass es eine elektrisch isolierende Flüssigkeit, insbesondere ein Kühlöl, ist. Durch die Verwendung einer elektrisch isolierenden Flüssigkeit wie eines Kühlöls wird das Auftreten von elektrischen Kurzschlüssen im Inneren der Maschine, insbesondere im Bereich der Wickelköpfe vermieden.

Eine bevorzugte Ausgestaltung der Erfindung sieht vor, dass das Gehäuse einen von einem weiteren Kühlmedium, insbesondere Kühlwasser, durchströmbaren, weiteren Kühlkanal aufweist, wobei der weitere Kühlkanal zumindest abschnittsweise benachbart zum Kühlkanal verläuft. Der weitere Kühlkanal ist dabei vom Kühlkanal getrennt, so dass sich das Kühlmedium mit dem weiteren Kühlmedium nicht vermischen kann. Der weitere Kühlkanal kann beispielsweise im Gehäuse in Umfangsrichtung verlaufen, wobei er insbesondere zu dem wenigstens einen Ringkanalabschnitt des Kühlkanals derart benachbart ist, dass eine Kühlung des Kühlmediums durch das weitere Kühlmedium ermöglicht wird. Bevorzugt wird für das weitere Kühlmedium Kühlwasser verwendet. Durch den weiteren Kühlkanal wird die Kühlung der elektrischen Maschine weiter verbessert. Durch einen in Umfangsrichtung des Gehäuses verlaufenden weiteren Kühlkanal, welcher dem wenigstens einen Ringabschnitt des Kühlkanals benachbart angeordnet ist, wird weiterhin ein möglichst großer Bereich gebildet, in dem der Kühlkanal dem weiteren Kühlkanal benachbart angeordnet ist.

Für das Gehäuse kann erfindungsgemäß vorgesehen sein, dass es einstückig ist oder dass es aus wenigstens zwei Gehäusebauteilen besteht. Bei einem einstückigen Gehäuse verläuft der Kühlkanal im Inneren einer einstückigen Gehäusewand. Ein aus wenigstens zwei Gehäusebauteilen bestehendes Gehäuse umfasst bevorzugt ein inneres Gehäusebauteil sowie ein an das innere Gehäusebauteil anschließendes und das innere Gehäusebauteil zumindest teilweise umgebendes äußeres Gehäusebauteil. Das innere Gehäusebauteil und das äußere Gehäusebauteil können dabei beispielsweise zylindrisch, insbesondere als Hohlzylinder, geformt sein. Bevorzugt kann der Kühlkanal in einer dem äußeren Gehäusebauteil zugewandten Oberfläche bzw. Mantelfläche des inneren Gehäusebauteils als Vertiefung ausgebildet sein, so dass der Kühlkanal von dem inneren Gehäusebauteil und dem äußeren Gehäusebauteil begrenzt wird. Zusätzlich oder alternativ dazu kann der Kühlkanal auch als Vertiefung in einer dem inneren Gehäusebauteil zugewandten Oberfläche bzw. Mantelfläche des äußeren Gehäusebauteils ausgebildet sein. Auch ein gegebenenfalls zusätzlich vorhandener weiterer Kühlkanal kann als Vertiefung in einer dem äußeren Gehäusebauteil zugewandten Oberfläche bzw. Mantelfläche des inneren Gehäusebauteils und/oder als Vertiefung in einer dem inneren Gehäusebauteil zugewandten Oberfläche bzw. Mantelfläche des äußeren Gehäusebauteils ausgebildet sein. Zwischen dem inneren Gehäusebauteil und dem äußeren Gehäusebauteil können Dichtungsmittel, wie beispielsweise Dichtungsringe, angeordnet werden.

Für ein erfindungsgemäßes Kraftfahrzeug ist vorgesehen, dass es wenigstens eine erfindungsgemäße elektrische Maschine umfasst.

Die elektrische Maschine kann beispielsweise zum Antrieb des Kraftfahrzeugs verwendet werden. Dabei kann es sich beispielsweise um einen Antrieb eines rein elektrischen Kraftfahrzeugs handeln oder um eine elektrische Maschine eines Kraftfahrzeugs mit Hybridantrieb. Das Kraftfahrzeug kann einen oder mehrere Kühlmediumkreisläufe aufweisen, welche mit dem oder den Kühlkanälen der elektrischen Maschine verbunden sind.

Weitere Vorteile und Einzelheiten der vorliegenden Erfindung ergeben sich aus den Ausführungsbeispielen sowie anhand der Zeichnungen. Dabei zeigen:
- Fig. 1: eine geschnittene Seitenansicht einer für das Verständnis der Erfindung nützlichen Ausführungsform einer elektrischen Maschine,

- Fig. 2: eine weitere geschnittene Seitenansicht einer für das Verständnis der Erfindung nützlichen Ausführungsform einer elektrischen Maschine,

- Fig. 3: eine geschnittene Seitenansicht eines weiteren Ausführungsbeispiels einer erfindungsgemäßen elektrischen Maschine,
- Fig. 4: eine perspektivische Ansicht eines inneren Gehäusebauteils, sowie
- Fig. 5: eine schematische Darstellung eines erfindungsgemäßen Kraftfahrzeugs.

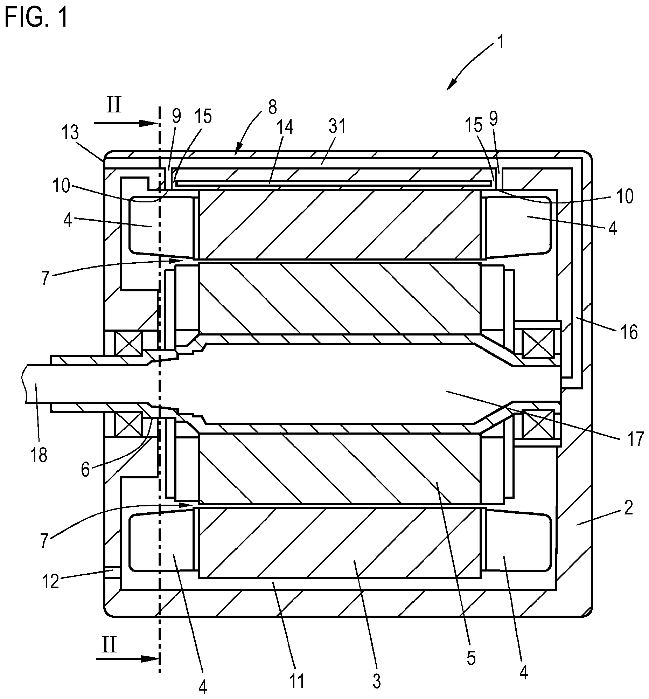

Fig. 1 zeigt einen Längsschnitt einer für das Verständnis der Erfindung nützlichen Ausführungsform einer elektrischen Maschine 1 Die elektrische Maschine 1 umfasst ein einstückiges Gehäuse 2, an welchem ein Stator 3 befestigt ist. Der Stator 3 weist an seinen beiden Seiten jeweils mehrere, in Umfangsrichtung angeordnete Wickelköpfe 4 auf. Die Wickelköpfe 4 werden jeweils von stirnseitig aus dem Stator 3 austretenden Statorwicklungen gebildet. Die Statorwicklungen können beispielsweise von mit Isolierlack überzogenen Kupferleitungen gebildet werden. Weiterhin umfasst die elektrische Maschine 1 einen Rotor 5, welcher mit einer Welle 6 verbunden ist. Zwischen dem Rotor 5 und dem Stator 3 ist ein Luftspalt 7 ausgebildet.

Das Gehäuse 2 weist einen von einem Kühlmittel, z. B. einem Kühlöl, durchströmbaren Kühlkanal 8 auf. Dieser Kühlkanal 8 umfasst in diesem Ausführungsbeispiel zwei Ringkanalabschnitte 9. Die Ringkanalabschnitte 9 sind in Längsrichtung der elektrischen Maschine 1 voneinander beabstandet und durch einen in Längsrichtung der elektrischen Maschine 1 verlaufenden Verbindungsabschnitt 31 verbunden, so dass durch sie eine Kühlung der Wickelköpfe 4 an beiden Seiten des Stators 3 erfolgen kann. Um den Wickelköpfen 4 das Kühlöl zuzuführen, weisen die Ringkanalabschnitte 9 jeweils mehrere als Düse ausgeführte Öffnungen 10 auf, welche jeweils benachbart zu einem Wickelkopf 4 angeordnet sind. Durch die Öffnungen 10 kann das im Kühlkanal 8 strömende Kühlöl den Wickelköpfen 4 durch Aufsprühen zugeführt werden.

Das auf die Wickelköpfe 4 aufgesprühte Kühlöl läuft an diesen entlang, wobei es Wärme aus den Wickelköpfen 4 aufnimmt. Das von den Wickelköpfen abtropfende oder abfließende Kühlöl sammelt sich anschließend in einem Kühlölsumpf 11 im unteren Teil der elektrischen Maschine 1. Aus diesem Kühlölsumpf 11 kann das Kühlöl durch den Ablauf 12 abfließen und einem hier nicht näher dargestellten Kühlkreislauf zugeführt werden. Der Kühlkreislauf kann beispielsweise eine Pumpe zum Fördern des Kühlöls umfassen sowie einen Wärmetauscher, an dem das Kühlöl die von den Wickelköpfen 4 aufgenommene Wärme abgeben kann. Anschließend kann das im Kreislauf fließende Kühlöl durch einen Anschluss 13 dem im Gehäuse 2 verlaufenden Kühlkanal 8 wieder zugeführt werden.

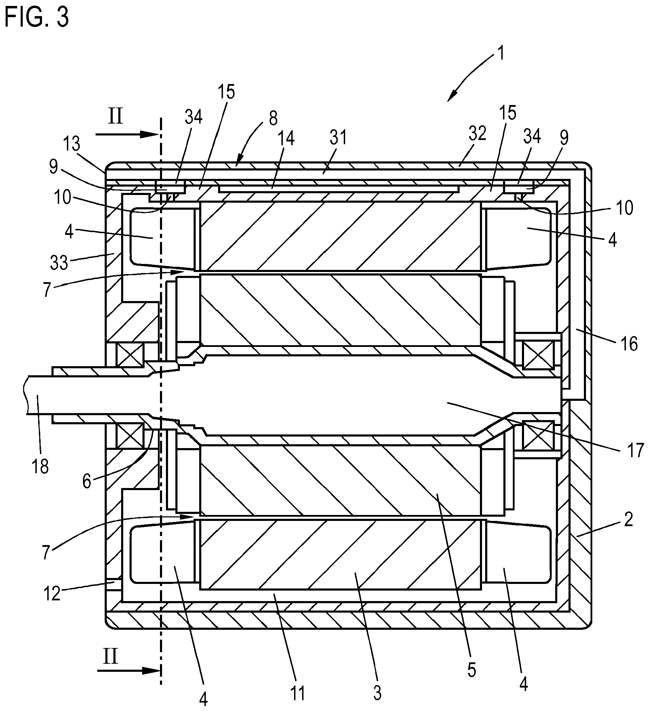

Das Gehäuse 2 weist weiterhin einen weiteren Kühlkanal 14 auf, welcher von Kühlwasser durchströmt ist. Der weitere Kühlkanal 14 verläuft im Inneren des Gehäuses 2 in Umfangsrichtung der elektrischen Maschine 1. Dabei ist der weitere Kühlkanal 14 in den Bereichen 15 benachbart zu den Ringkanalabschnitten 9 angeordnet. Die Ringkanalabschnitte 9 verlaufen ebenfalls innerhalb des Gehäuses 2 in Umfangsrichtung der elektrischen Maschine 1. In den Bereichen 15 weist das Gehäusematerial, beispielsweise Metall oder Kunststoff, eine geringe Dicke auf, so dass ein möglichst guter Wärmeübergang von dem Kühlöl in den Ringkanälen 9 auf das Kühlwasser im weiteren Kühlkanal 14 ermöglicht wird. Das Gehäuse 2 kann einstückig, beispielsweise in einem Gießprozess aus Metall oder Kunststoff, gefertigt werden, oder, wie im Folgenden in Fig. 3 dargestellt wird, aus mehreren Teilen zusammengesetzt werden, wobei beispielsweise die Ringkanäle ganz oder teilweise von einem oder mehreren Teilen gebildet werden können.

Der Kühlkanal 8 ist über einen weiteren Kanalabschnitt 16 mit einem in der als Hohlwelle ausgeführten Welle 6 verlaufenden Wellenkühlkanal 17 verbunden. Dadurch kann das durch den Kühlkanal 8 strömende Kühlöl zusätzlich zu den Wickelköpfen 4 auch dem Inneren der Welle 6 zugeführt werden. Über einen Auslass 18 der Welle kann das Kühlöl einem Kühlmittel im Kühlmediumkreislauf zugeführt werden. Dabei kann es sich insbesondere um denselben Kühlmediumskreislauf handeln, dem auch das aus dem Auslass 12 abfließende Kühlöl zugeführt wird.

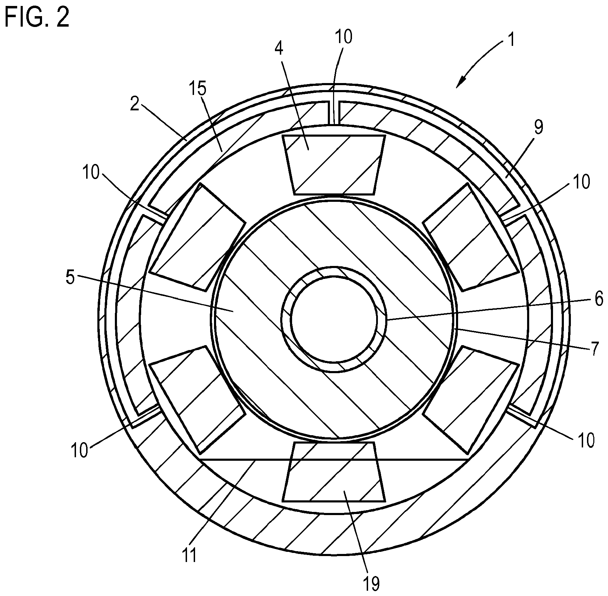

Fig. 2 zeigt einen Querschnitt der für das Verständnis der Erfindung nützlichen Ausführungsform einer elektrischen Maschine 1 entsprechend der Schnittlinie II aus Fig. 1. In dieser Ansicht ist ein kreissegmentförmiger Verlauf des Ringkanalabschnitts 9 erkennbar. Der Ringkanalabschnitt 9 weist mehrere Öffnungen 10 auf, welche jeweils einem Wickelkopf 4 des Stators 3 benachbart gegenüber angeordnet sind. Mit Ausnahme des unten liegenden Wickelkopfes 19, welcher teilweise von dem Öl des Kühlölsumpfes bedeckt ist, kann jedem der Wickelköpfe 4 über den Ringkanal 9 Kühlöl durch Aufsprühen zugeführt werden. Auf diese Weise kann jeder der Wickelköpfe 4, 19 der elektrischen Maschine 1 gekühlt werden. Ein weiterer Ringkanal, welcher in Längsrichtung der elektrischen Maschine 1 bebabstandet angeordnet ist und zur Kühlung von Wickelköpfen an der anderen Seite des Stators dient, kann einen zu dieser Darstellung entsprechenden Verlauf aufweisen, so dass alle Wickelköpfe der elektrischen Maschine gekühlt werden können.

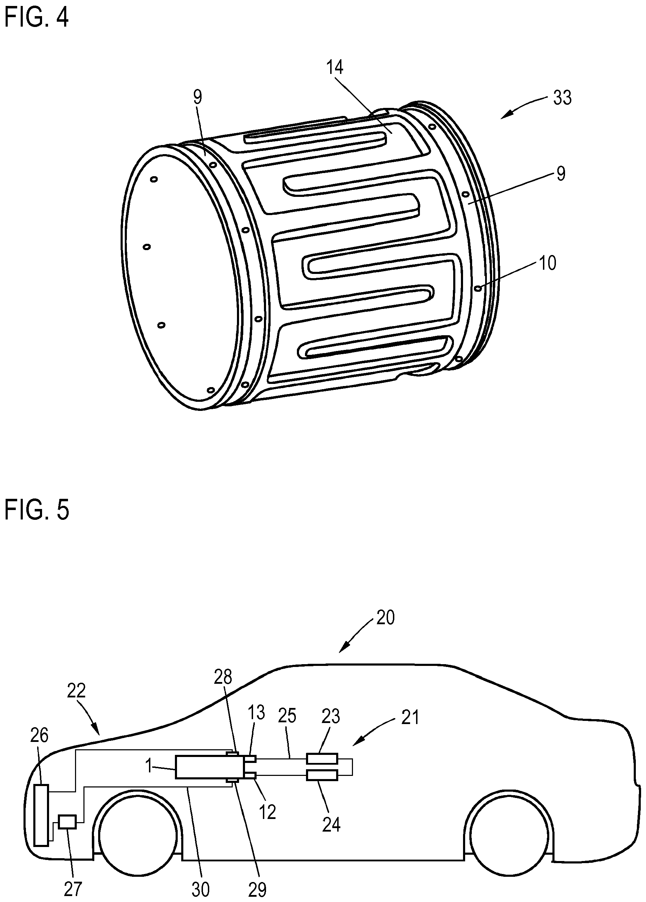

In Fig. 3 ist ein alternatives Ausführungsbeispiel einer erfindungsgemäßen elektrischen Maschine 1 dargestellt, bei dem das Gehäuse 2 aus einem äußeren Gehäusebauteil 32 und einem inneren Gehäusebauteil 33 besteht. Die weiteren Komponenten entsprechen der in Fig. 2 gezeigten Ausführung und sind mit den gleichen Bezugszeichen gekennzeichnet. Das innere Gehäusebauteil 33 weist an seiner dem äußeren Gehäusebauteil 32 zugewandten Oberfläche bzw. Mantelfläche Vertiefungen auf, durch welche die Ringkanalabschnitte 9 sowie der weitere Kühlkanal 14 gebildet werden. Eine perspektivische Ansicht eines inneren Gehäusebauteils 33 ist in Fig. 4 dargestellt. Die Ringkanalabschnitte 9 sowie der mäanderförmige, weitere Kühlkanal 14 werden in radialer Richtung nach außen durch das äußere Gehäusebauteil 32 begrenzt. In dem äußeren Gehäuseabschnitt 32 ist der Verbindungsabschnitt 31 des Kühlkanals 8 ausgebildet, welcher mit den Ringkanalabschnitten 9 über Öffnungen 34 kommuniziert. Der weitere Kanalabschnitt 16 wird in diesem Ausführungsbeispiel von dem inneren Gehäusebauteil 33 und dem äußeren Gehäusebauteil 32 begrenzt. Das innere Gehäusebauteil 33 und das äußere Gehäusebauteil 32 können beispielsweise aus Metall oder aus Kunststoff gefertigt werden. Um eine Abdichtung der Ringkanalabschnitte 9 sowie des weiteren Kühlkanals 14 zu erreichen, können zwischen dem inneren Gehäusebauteil 33 und dem äußeren Gehäusebauteil 32 Dichtungselemente, wie beispielsweise Dichtungsringe, angeordnet werden.

Fig. 5 zeigt eine schematische Seitenansicht eines erfindungsgemäßen Kraftfahrzeugs 20. Das Kraftfahrzeug 20 umfasst eine elektrische Maschine 1, welche als Elektromotor zum Antrieb eines Kraftfahrzeugs 20 ausgeführt ist. Das Kraftfahrzeug 20 umfasst weiterhin einen Kühlölkreislauf 21 sowie einen Kühlwasserkreislauf 22. Der Kühlölkreislauf 21 umfasst eine Pumpe 23 zum Fördern des Kühlöls sowie einen Wärmetauscher 24, über den das Kühlöl im Inneren der elektrischen Maschine aufgenommene Wärme abgeben kann. Eine Zufuhr des Kühlöls zur elektrischen Maschine 1 erfolgt dabei über Kühlölleitungen 25 am Einlass 13 der elektrischen Maschine 1. Eine Rückführung des Kühlöls in den Kühlölkreislauf 21 erfolgt an dem mit dem Kühlölsumpf 11 verbundenen Auslass 12.

Der Kühlwasserkreislauf 22 umfasst ebenfalls einen Wärmetauscher 26 sowie eine Pumpe 27. Durch diesen Kühlkreislauf kann über einen an der Oberseite der elektrischen Maschine 1 vorgesehenen Anschluss 28 dem weiteren Kühlkanal 14 der elektrischen Maschine Kühlwasser zugeführt werden. Durch einen mit dem weiteren Kühlkanal 14 korrespondierenden Ablauf 29 an der Unterseite der elektrischen Maschine kann das Kühlwasser dem Kühlkreislauf 22 über Kühlwasserleitungen 30 wieder zugeführt werden.

## Patentansprüche

1. Elektrische Maschine mit einem Gehäuse (2), in dem ein Stator (3) mit mehreren Wickelköpfen (4) angeordnet ist, wobei das Gehäuse (2) wenigstens einen von einem Kühlmedium durchströmbaren Kühlkanal (8) aufweist, wobei der Kühlkanal (8) wenigstens einen kreisförmigen oder kreissegmentförmigen Ringkanalabschnitt (9) umfasst, über den das Kühlmedium durch wenigstens eine Öffnung (10) wenigstens einem Wickelkopf (4) zuführbar ist, wobei das Gehäuse (2) einen von einem weiteren Kühlmedium durchströmbaren, weiteren Kühlkanal (14) aufweist, wobei der weitere Kühlkanal (14) von dem Kühlkanal (8) getrennt ist, so dass sich das Kühlmedium mit dem weiteren Kühlmedium nicht vermischen kann, und zumindest abschnittsweise benachbart zum Kühlkanal (8) verläuft, so dass das Kühlmedium durch das weitere Kühlmedium kühlbar ist,
**dadurch gekennzeichnet, dass** das Gehäuse (2) aus wenigstens zwei Gehäusebauteilen besteht, wobei das Gehäuse (2) ein als ein Hohlzylinder geformtes inneres Gehäusebauteil (33) und ein an das innere Gehäusebauteil (33) anschließendes, das innere Gehäusebauteil (33) zumindest teilweise umgebendes, als ein Hohlzylinder geformtes äußeres Gehäusebauteil (32) umfasst, wobei der Kühlkanal (8) und der weitere Kühlkanal (14) in einer dem äußeren Gehäusebauteil (32) zugewandten Mantelfläche des inneren Gehäusebauteils (33) und/oder einer dem inneren Gehäusebauteil (33) zugewandten Mantelfläche des äußeren Gehäusebauteils (32) als Vertiefung ausgebildet sind.

2. Elektrische Maschine nach Anspruch 1,
**dadurch gekennzeichnet,**
**dass** die wenigstens eine Öffnung (10) eine Düse ist, durch welche das Kühlmedium wenigstens einem Wickelkopf (4) durch Aufsprühen zuführbar ist.

3. Elektrische Maschine nach Anspruch 1 oder 2,
**dadurch gekennzeichnet,**
**dass** das Kühlmedium über den Ringkanalabschnitt (9) wenigstens einem in Einbauposition der elektrischen Maschine (1) oben liegenden Wickelkopf (4) zuführbar ist.

4. Elektrische Maschine nach einem der vorangehenden Ansprüche,
**dadurch gekennzeichnet,**
**dass** das Kühlmedium über den Ringkanalabschnitt (9) mehreren, in Umfangsrichtung der elektrischen Maschine (1) beabstandet voneinander angeordneten Wickelköpfen (4) zuführbar ist.

5. Elektrische Maschine nach einem der vorangehenden Ansprüche,
**dadurch gekennzeichnet,**
**dass** der Kühlkanal (8) zwei Ringkanalabschnitte (9) umfasst, welche in Längsrichtung der elektrischen Maschine (1) voneinander beabstandet sind, wobei über den einen Ringkanalabschnitt (9) wenigstens einem Wickelkopf an einer Seite des Stators (3) das Kühlmedium zuführbar ist und über den anderen Ringkanalabschnitt (9) wenigstens einem Wickelkopf (4) an einer anderen Seite des Stators (3) das Kühlmedium zuführbar ist.

6. Elektrische Maschine nach Anspruch 5,
**dadurch gekennzeichnet,**
**dass** der Kühlkanal (8) wenigstens einen Verbindungsabschnitt (31) umfasst, welcher die zwei Ringkanalabschnitte (9) miteinander verbindet.

7. Elektrische Maschine nach einem der vorangehenden Ansprüche,
**dadurch gekennzeichnet,**
**dass** das Gehäuse (2) wenigstens einen mit dem Kühlkanal (8) kommunizierenden Anschluss (13) zur Zufuhr des Kühlmediums aufweist.

8. Elektrische Maschine nach einem der vorangehenden Ansprüche,
**dadurch gekennzeichnet,**
**dass** die elektrische Maschine (1) eine Welle (6) mit einem Wellenkühlkanal (17) umfasst, wobei der Kühlkanal (8) mit dem Wellenkühlkanal (17) verbunden ist.

9. Elektrische Maschine nach einem der vorangehenden Ansprüche,
**dadurch gekennzeichnet,**
**dass** das Kühlmittel eine elektrisch isolierende Flüssigkeit, insbesondere ein Kühlöl, ist.

10. Elektrische Maschine nach einem der vorangehenden Ansprüche,
**dadurch gekennzeichnet,**
**dass** das weitere Kühlmedium Kühlwasser ist.

11. Kraftfahrzeug umfassend wenigstens eine elektrische Maschine (1) nach einem der vorangehenden Ansprüche.

## Claims

1. Electrical machine having a housing (2) in which is arranged a stator (3) having several winding heads (4), wherein the housing (2) has at least one cooling duct (8) through which a cooling medium can flow, wherein the cooling duct (8) comprises at least one circular or circular-segment-shaped annular duct portion (9) via which the cooling medium can be supplied to at least one winding head (4) through at least one opening (10), wherein the housing (2) has a further cooling duct (14) through which a further cooling medium can flow, wherein the further cooling duct (14) is separate from the cooling duct (8), such that the cooling medium cannot mix with the further cooling medium, and extends at least in some parts adjacent to the cooling duct (8) such that the cooling medium can be cooled by the further cooling medium,
**characterized in that** the housing (2) consists of at least two housing components, wherein the housing (2) comprises an inner housing component (33) in the shape of a hollow cylinder and an outer housing component (32) in the shape of a hollow cylinder adjoining on the inner housing component (33) and surrounding the inner housing component (33) at least partially, wherein the cooling duct (8) and the further cooling duct (14) are formed as an indentation in a jacket surface, facing the outer housing component (32), of the inner housing component (33) and/or a jacket surface, facing the inner housing component (33), of the outer housing component (32).

2. Electrical machine according to claim 1,
**characterized in that**
the at least one opening (10) is a nozzle, through which the cooling medium can be supplied to the at least one winding head (4) by spraying.

3. Electrical machine according to claim 1 or 2,
**characterized in that**
the cooling medium can be supplied via the annular duct portion (9) to at least one winding head (4) situated at the top in the installed position of the electrical machine (1).

4. Electrical machine according to any of the preceding claims,
**characterized in that**
the cooling medium can be supplied via the annular duct portion (9) to several winding heads (4) arranged spaced from one another in peripheral direction of the electrical machine (1).

5. Electrical machine according to any of the preceding claims,
**characterized in that**
the cooling duct (8) comprises two annular duct portions (9) which are spaced from one another in longitudinal direction of the electrical machine (1), wherein via the one annular duct portion (9) the cooling medium can be supplied to at least one winding head at one side of the stator (3) and via the other annular duct portion (9) the cooling medium can be supplied to at least one winding head (4) at another side of the stator (3).

6. Electrical machine according to claim 5,
**characterized in that**
the cooling duct (8) comprises at least one connection portion (31) which connects the two annular duct portions (9) to one another.

7. Electrical machine according to any of the preceding claims,
**characterized in that**
the housing (2) has at least one terminal (13) communicating with the cooling duct (8) for supplying the cooling medium.

8. Electrical machine according to any of the preceding claims,
**characterized in that**
the electrical machine (1) comprises a shaft (6) having a shaft cooling duct (17), wherein the cooling duct (8) is connected to the shaft cooling duct (17).

9. Electrical machine according to any of the preceding claims,
**characterized in that**
the cooling medium is an electrically insulating fluid, in particular a cooling oil.

10. Electrical machine according to any of the preceding claims,
**characterized in that**
the further cooling medium is cooling water.

11. Motor vehicle comprising at least one electrical machine (1) according to any of the preceding claims.

## Revendications

1. Machine électrique avec un boîtier (2), dans lequel un stator (3) avec plusieurs têtes d'enroulement (4) est agencé, dans laquelle le boîtier (2) présente au moins un canal de refroidissement (8) pouvant être traversé par un fluide de refroidissement, dans laquelle le canal de refroidissement (8) comprend au moins une section de canal annulaire (9) circulaire ou en forme de segment circulaire, par le biais de laquelle le fluide de refroidissement peut être amené par au moins une ouverture (10) au moins à une tête d'enroulement (4), dans laquelle le boîtier (2) présente un autre canal de refroidissement (14) pouvant être traversé par un autre fluide de refroidissement, dans laquelle l'autre canal de refroidissement (14) est séparé du canal de refroidissement (8) de sorte que le fluide de refroidissement ne puisse se mélanger à l'autre fluide de refroidissement, et s'étend au moins par sections de manière contiguë au canal de refroidissement (8) de sorte que le fluide de refroidissement puisse être refroidi par l'autre fluide de refroidissement,
**caractérisée en ce que** le boîtier (2) se compose d'au moins deux composants de boîtier, dans laquelle le boîtier (2) comprend un composant de boîtier (33) intérieur formé comme un cylindre creux et un composant de boîtier (32) extérieur formé comme un cylindre creux, entourant au moins partiellement le composant de boîtier (33) intérieur, contigu au composant de boîtier (33) intérieur, dans laquelle le canal de refroidissement (8) et l'autre canal de refroidissement (14) sont formés en tant qu'évidement dans une surface enveloppe tournée vers le composant de boîtier (32) extérieur du composant de boîtier (33) intérieur et/ou une surface enveloppe tournée vers le composant de boîtier (33) intérieur du composant de boîtier (32) extérieur.

2. Machine électrique selon la revendication 1,
**caractérisée en ce que**
l'au moins une ouverture (10) est une buse par laquelle le fluide de refroidissement peut être fourni au moins à une tête d'enroulement (4) par pulvérisation.

3. Machine électrique selon la revendication 1 ou 2,
**caractérisée en ce que**
le fluide de refroidissement peut être fourni par le biais de la section de canal annulaire (9) au moins à une tête d'enroulement (4) se trouvant en haut en position installée de la machine électrique (1).

4. Machine électrique selon l'une quelconque des revendications précédentes,
**caractérisée en ce que**
le fluide de refroidissement peut être fourni par le biais de la section de canal annulaire (9) à plusieurs têtes d'enroulement (4) agencées à distance les unes des autres dans le sens périphérique de la machine électrique (1).

5. Machine électrique selon l'une quelconque des revendications précédentes,
**caractérisée en ce que**
le canal de refroidissement (8) comprend deux sections de canal annulaire (9) qui sont espacées l'une de l'autre dans le sens longitudinal de la machine électrique (1), dans laquelle le fluide de refroidissement peut être fourni par le biais de l'une section de canal annulaire (9) à au moins une tête d'enroulement au niveau d'un côté du stator (3) et le fluide de refroidissement peut être fourni par le biais de l'autre section de canal annulaire (9) au moins à une tête d'enroulement (4) au niveau d'un autre côté du stator (3).

6. Machine électrique selon la revendication 5,
**caractérisée en ce que**
le canal de refroidissement (8) comprend au moins une section de liaison (31) qui relie les deux sections de canal annulaire (9) l'une à l'autre.

7. Machine électrique selon l'une quelconque des revendications précédentes,
**caractérisée en ce que**
le boîtier (2) présente au moins un raccord (13) communiquant avec le canal de refroidissement (8) pour la fourniture du fluide de refroidissement.

8. Machine électrique selon l'une quelconque des revendications précédentes,
**caractérisée en ce que**
la machine électrique (1) comprend un arbre (6) avec un canal de refroidissement d'arbre (17), dans lequel le canal de refroidissement (8) est relié au canal de refroidissement d'arbre (17).

9. Machine électrique selon l'une quelconque des revendications précédentes,
**caractérisée en ce que**
le fluide de refroidissement est un liquide électroisolant, en particulier une huile de refroidissement.

10. Machine électrique selon l'une quelconque des revendications précédentes,
**caractérisée en ce que**
l'autre fluide de refroidissement est de l'eau de refroidissement.

11. Véhicule automobile comprenant au moins une machine électrique (1) selon l'une quelconque des revendications précédentes.
